# EUROPEAN PATENT SPECIFICATION

(11) **EP 4 727 722 B1**
(45) Date of publication and mention of the grant of the patent: **28.10.2026**
(21) Application number: 24732972.5
(22) Date of filing: 13.06.2024
(51) Int. Cl.: B23K 26/06, B23K 26/082, B23K 26/21, B23K 26/38

(54) **LASER MACHINING DEVICE FOR MACHINING A WORKPIECE, USE THEREOF, METHOD FOR LASER MACHINING A WORKPIECE, AND CORRESPONDING COMPUTER PROGRAM PRODUCT**
LASERBEARBEITUNGSVORRICHTUNG ZUM BEARBEITEN EINES WERKSTÜCKS, VERWENDUNG EINER LASERBEARBEITUNGSVORRICHTUNG, VERFAHREN ZUM LASERBEARBEITEN EINES WERKSTÜCKS, UND ENTSPRECHENDES COMPUTERPROGRAMMPRODUKT
DISPOSITIF D'USINAGE AU LASER POUR USINER UNE PIÈCE, SON UTILISATION, PROCÉDÉ D'USINAGE AU LASER D'UNE PIÈCE, ET PROGRAMME D'ORDINATEUR CORRESPONDANT

(30) Priority: 14.06.2023 EP 23179197
(43) Date of publication of application: 22.04.2026
(73) Proprietor: Bystronic Laser AG, 3362 Niederönz (CH)
(72) Inventor: SCHWIND, Tobias, 3360 Herzogenbuchsee (CH); SCHEIDIGER, Simon, 4900 Langenthal (CH)
(74) Representative: Patentanwälte Geyer, Fehners & Partner mbB
(86) International application number: PCT/EP2024/066411
(87) International publication number: WO 2024/256562

(56) References cited:
- DE-A1- 102013 110 523
- DE-A1- 102022 127 259
- US-A1- 2022 143 756
- US-B2- 8 781 269

## Description

The invention relates to a laser machining device for machining a workpiece, a use thereof, a method for laser machining a workpiece and a computer program product, see claims 1, 7, 8, and 13 respectively.

Laser machining devices are used in the laser machining of workpieces, for example in methods for the thermal separation of materials by means of a laser beam, also referred to as laser cutting, or in laser welding methods. Such a laser machining device can have a laser machining head. The laser machining device or laser machining head guides and forms the laser beam tool, i.e. the machining laser beam, onto the workpiece in the best possible manner.

Different laser beams may be optimal for machining purposes, depending on the type of workpiece, for example, thickness and material of a sheet, type of machining, for example, laser cutting or laser welding, and the desired machining result, for example, maximizing the cutting speed or avoiding pores during welding. Known laser machining devices usually provide an unchangeable optical aspect ratio for the machining laser beam. In practice, however, this aspect represents a compromise: An unchangeable aspect, in particular for medium to large sheet thicknesses, is associated with losses, for example in cutting quality, namely related to roughness and burr adhesion, as well as lower feed speeds.

In recent years, various manufacturers of laser machining devices have developed zoom optics in order to adapt the spot size of the focused machining laser beam to the respective application, for example to the sheet thickness and material in the case of laser cutting.

One step further in the adaptation of the laser beam tool to the machining process are approaches in which the intensity distribution and/or the beam quality, for example the beam parameter product, can also be adapted to the laser application. Various solutions in this direction are known from the prior art, see US 8781269 B2, US 9250390 B2, US 9346126 B2, EP 2730363 A1, EP2762263 A1, DE2821883 B1, DE102015116033 A1, EP2778746 B1, DE102015101263 A1, DE102008053397 B4.

High-frequency beam oscillation is one of the dynamic beam shaping (DBS) technologies and has the advantage that almost any intensity distributions and temperature fields can be generated in the process zone, allowing maximum flexibility in adapting to the workpiece type, e.g. to the sheet thickness and/or sheet quality. It is also known that significantly better machining results can be achieved with machining laser beams adapted in this way, see for example Goppold et al: Chancen und Herausforderungen der dynamischen Strahlformung, Deutscher Schneidkongress, 2018; Goppold et al.: Dynamic Beam Shaping Improves Laser

Cutting of Thick Steel Plates, Industrial Photonics, 2017; Goppold et al.: Laserschmelzschneiden mit dynamischer Strahlformung, Fraunhofer IWS Jahresbericht, 2015; Mahrle et al.: theoretical aspects of fibre laser cutting, Journal of Physics D Applied Physics, 2009. US2022/0143756 A1 describes a machining apparatus for the laser machining of a workpiece, having a first laser beam guiding device arranged and designed such that it guides the machining laser beam to a second laser beam guiding device and dynamically moves, in particular dynamically shapes, the machining laser beam. DE 102013110523 A1 (describing the preamble of claim 1) shows a joining device for joining workpieces by a laser beam. A low frequency deflection unit and a high frequency deflection unit are connected in series in the beam path of the laser beam.

Various technologies are used for the lateral deflection of a machining laser beam, which is also referred to as scanning the laser beam. Examples include galvo scanners, piezo scanners, voice coil scanners and MEMS scanners. The aim of these technologies is to deflect the machining laser beam as quickly as possible, for example at high frequency, and laterally, for example in an x/y plane parallel to the workpiece surface, and as wide as possible, i.e. with large angles in a large lateral scanning range. The deflection frequencies are also referred to as setting frequencies and the deflection angles are also referred to as setting angles. However, for physical and technical reasons, high deflection frequencies, such as 10 kHz, and large deflection angles, such as > ±5 mrad, of the machining laser beam cannot be realized simultaneously with known laser scanners used for the laser machining of workpieces. These physical and technical reasons are due to, for example, natural frequencies and the mechanical stability of components of the machining device, occurring accelerations of moving elements and the force required for the movement.

The object of the invention is to provide a laser machining device and a method for laser machining a workpiece, which provide the machining laser beam in a simple and optimal manner.

This object is achieved by a laser machining device for machining a workpiece according to claim 1, a use according to claim 7, a method for laser machining a workpiece according to claim 8 and a computer program product according to claim 13.

One embodiment relates to a laser machining device for machining a workpiece as defined in claim 1, in particular for laser cutting or laser welding, in particular a laser machining head, with
- an interface for coupling a laser beam source for a machining laser beam;
- an outlet opening for the machining laser beam; and
- an optical system between the interface and the outlet opening, which has at least one laser beam guiding device for guiding the machining laser beam in a beam path to the outlet opening; wherein the laser beam guiding device includes at least two high-frequency laser scanners connected in series in the beam path in the propagation direction of the machining laser beam, which are each designed to deflect the machining laser beam by at least one setting angle,
wherein each of the high-frequency laser scanners is designed to provide a maximum setting angle for deflecting the machining laser beam in a first setting plane, and wherein a maximum summary setting angle in the first setting plane is achieved by the serial connection of the high-frequency laser scanners; wherein each of the high-frequency laser scanners is designed to deflect the machining laser beam in the first setting plane with a setting frequency in a range greater than or equal to 0.5 kHz; and wherein the setting angles of each high-frequency scanner in the first setting plane are added together by the serial connection.

The above embodiment enables the setting angle of each high-frequency laser scanner, with which the machining laser beam of the laser machining device can be deflected for machining the workpiece in the first setting plane, to be set within a range up to the maximum setting angle. In particular, the first setting plane can be the plane in which the relevant setting angle and the propagation direction of the machining laser beam lie. The setting angles of each high-frequency laser scanner in the first setting plane are added together by the serial connection and a summary setting angle is achieved. In this way, the scanning range, i.e. the range in which the machining laser beam can be deflected over the workpiece, can be advantageously enlarged in a first direction, which runs in the first setting plane, while at the same time maintaining a high frequency of the high-frequency laser scanners.

The above embodiment therefore makes it possible to achieve a summarily increased maximum setting angle despite the use of high-frequency laser scanners. This is made possible instead of optimizing a single multi-axis scanner for the setting frequency and deflection, i.e. the setting angle, and thus only achieving a compromise between setting frequency and deflection, wherein the frequency can then not be a high frequency if the setting angle is large. The large deflection, i.e. the large scanning range, is achieved by arranging at least two or a plurality of high-frequency laser scanners (i.e. with a setting frequency of at least 500 Hz) in series in the propagation direction of the machining laser beam, whereby a larger scanning range can be achieved with a simultaneous high-frequency setting frequency.

Furthermore, the setting angle at which the machining laser beam is moved can be optimized independently of the setting frequency. In addition, higher setting frequencies can be provided with a large scanning range, as a plurality of high-frequency laser scanners, for example even more than two high-frequency laser scanners, are connected in series. This allows the aforementioned physical and technical limits of a high-frequency laser scanner to be extended. **In** addition, the previously unsolvable hardware problem of the aforementioned physical and technical limits of a high-frequency laser scanner can be solved by optimized operation of multiple high-frequency laser scanners, for example by means of software, such as one or a plurality of program modules. **In** this manner, the machining of the workpiece and the process efficiency of the machining can be optimized.

**In** one modification, at least one of the high-frequency laser scanners can be designed to provide a further maximum setting angle in a second setting plane. **In** this manner, the scanning range can be enlarged not only in a first direction, but also in a second direction, in particular a direction perpendicular to the first setting plane. Alternatively, each of the high-frequency laser scanners can be designed to provide the further maximum setting angle in the second setting plane. This also allows the scanning range to be maximized. **In** other modifications, at least one of the high-frequency laser scanners can be designed to provide maximum setting angles in further setting planes in addition to the first and second setting planes. **In** particular, the second setting plane can be the plane in which the relevant setting angle and the propagation direction of the machining laser beam lie.

The first setting plane and the second setting plane can be arranged at an angle and/or perpendicular to one another. This means that an extensive scanning range can be flexibly acquired in both the first and second setting planes through combined deflection of the machining laser beam. Due to the serial connection of the high-frequency laser scanners, a further maximum summary setting angle can be achieved in the second setting plane. **In** this manner, the scanning range can be significantly enlarged in both the first and second setting planes through deflection of the machining laser beam.

At least two of the high-frequency laser scanners can be designed to deflect the machining laser beam by setting angles that are the same or different. Furthermore, at least two of the high-frequency laser scanners can be designed to provide the maximum setting angle and the further maximum setting angle such that they are the same or different. This allows a scanning range to be set flexibly.

Each of the high-frequency laser scanners can be designed to deflect the machining laser beam in the second setting plane with a setting frequency in a range greater than or equal to 0.5 kHz. In further modifications, at least one or each of the high-frequency laser scanners can be designed to deflect the machining laser beam in at least one of the setting planes with a setting frequency between 1 kHz and 10 kHz. Furthermore, the maximum setting angle can be less than or equal to 50 mrad, preferably 1 to 30 mrad, more preferably 2 to 20 mrad. The further maximum setting angle can be less than or equal to 50 mrad, preferably 1 to 30 mrad, more preferably 2 to 20 mrad.

At least one or each of the high-frequency laser scanners can have at least one movable surface at least partially reflecting the machining laser beam and at least one controllable actuator for moving the surface. The at least one reflecting movable surface can be selected from a dynamically orientable mirror, a dynamically tiltable mirror, a segmented mirror with multiple dynamically orientable mirror segments, a dynamically deformable mirror, a dynamically deformable mirror with variable radius of curvature (VRM), a dynamically bimorph deformable mirror, a dynamically deformable mirror based on MEMS or MOEMS technology and a dynamically voice coil deformable mirror. The at least one controllable actuator can be selected from a piezo actuator, an electric motor, a pneumatic motor, an eccentric, a device for generating an oscillating electromagnetic field, a MEMS oscillator, a voice coil, an electrostatically movable actuator, a galvanometer drive, a plurality thereof and/or a combination thereof. Preferably, the high-frequency laser scanners are piezo high-frequency laser scanners.

At least one or each of the high-frequency laser scanners can have at least one movable surface at least partially reflecting the machining laser beam and at least one controllable actuator for moving the surface, wherein the reflecting movable surfaces are each designed to be tiltable with the actuator about at least one axis lying in a plane of the respective surface, also referred to as a tilt axis. A surface with one tilt axis is referred to as a uniaxial surface. A surface with two tilt axes is referred to as a biaxial surface. A surface with multiple tilt axes is referred to as a multi-axis surface.

In one embodiment of the combination of high-frequency laser scanners, a total of two reflecting tiltable surfaces connected in series in the propagation direction of the machining laser beam can be provided, which each have one axis and which differ in at least one parameter selected from the setting frequency with which they can be tilted and the setting angle by which they can be tilted. In this embodiment, two uniaxial surfaces are combined in series. In an alternative embodiment of the combination of the high-frequency laser scanners, at least two reflecting tiltable surfaces connected in series in the propagation direction of the machining laser beam can be provided, wherein one or a plurality of uniaxial surfaces and one or a plurality of multi-axis surfaces are combined in series, more than two uniaxial surfaces are combined in series or at least two multi-axis surfaces are combined in series. At least two of the surfaces of the alternative embodiment can be the same or different in at least one parameter selected from the number of axes per surface, the setting frequency with which the surfaces can be dynamically tilted, and the setting angles by which the surfaces can be dynamically tilted.

In the modification of the device with tiltable surfaces of the high-frequency laser scanners, the following embodiments can be realized: The axes of each surface can be arranged at an angle to one another, for example at a 90° angle or at an angle of less than 90°. At least some of the axes of the surfaces connected in series can be arranged in parallel or at an angle to one another. If a total of two reflecting tiltable surfaces of the high-frequency laser scanners connected in series in the propagation direction of the machining laser beam are provided, one of the two surfaces can be settable to a higher setting frequency than the other of the two surfaces. Furthermore, the other of the two surfaces can be settable to a larger setting angle than the first of the two surfaces.

In a combination of the high-frequency laser scanners, in which a total of at least two reflecting tiltable surfaces connected in series in the propagation direction of the machining laser beam are provided, wherein one or a plurality of uniaxial surfaces and one or a plurality of multi-axis surfaces are combined in series, more than two uniaxial surfaces are combined in series or at least two multi-axis surfaces are combined in series, the following embodiments can be realized: At least one of the high-frequency laser scanners can be settable or set to a greater setting frequency than at least one other of the high-frequency laser scanners. Furthermore, at least one of the high-frequency laser scanners can be settable or set to a larger setting angle than at least one other of the high-frequency laser scanners. At least two of the high-frequency laser scanners can be settable or set to the same setting frequency. The number of surfaces can be at least three and the number of axes per surface can be one. One of the surfaces can have a number of axes per surface of at least two and another of the surfaces can have a number of axes per surface of one.

The following combinations of high-frequency laser scanners can be realized in the laser beam guiding device: Two equally fast multi-axis scanners can be combined, wherein the highest possible frequencies are achieved. Two equally fast multi-axis scanners can be connected in series, wherein the largest possible scanning range is achieved. A multi-axis scanner with the highest possible frequency and a multi-axis scanner with the highest possible deflection can be arranged in series. Furthermore, a multi-axis scanner combined with a uniaxial scanner can be connected in series. Two uniaxial scanners can be combined in series, wherein one is optimized for the setting frequency and one is optimized for a large setting angle.

A control unit for controlling the high-frequency laser scanners and/or the laser machining device can be provided in the laser machining device. The control unit can have one or a plurality of program modules for optimizing and/or maximizing the setting frequency and/or the setting angle. The laser machining device and/or the control unit can have a memory device. One or a plurality of the components of the laser machining device can be designed to be controllable and connected to the control unit in a wired or non-wired data-transmitting manner. One or a plurality of, in particular each, of the high-frequency laser scanners can be designed to be controllable, in particular individually controllable.

The laser machining device can be designed as a machining head and a device for moving the machining head can be provided. A laser beam source for the machining laser beam can be coupled to the interface, in particular a laser beam source with a laser power greater than or equal to 1 kW, preferably between 1 kW and 100 kW.

Another embodiment relates to a use of a laser machining device according to the preceding embodiment and modifications thereof as defined in claim 7, for performing at least one procedure selected from
- machining a workpiece with at least one setting frequency in a range greater than or equal to 0.5 kHz, preferably between 1 kHz and 10 kHz, and/or with at least one of the summary setting angles (Σα; Σβ), in particular with at least one of the maximum summary setting angles (Σα_{max;;} Σβₘₐₓ), and/or with a laser power greater than or equal to 1 kW, preferably between 1 kW and 100 kW, of the laser beam source;
- machining a workpiece with the laser machining device designed as a machining head, with optimization of a movement trajectory of the machining laser beam in at least one workpiece plane, in particular in accordance with at least one predetermined contour of workpiece parts to be cut or weld seams, by means of redundant division of the movement trajectory of the machining laser beam between the device for moving the machining head and the high-frequency laser scanners;
- centring the machining laser beam in the outlet opening;
- laser cutting with the cutting gas beam decentred in relation to the machining laser beam, in particular laser cutting for producing bevel cuts or laser cutting of tubes;
- laser cleaning;
- laser hardening;
- removing filler material from CFRP materials using the machining laser beam, in particular fibreglass; and
- laser welding.

Another embodiment relates to a method for laser machining a workpiece, in particular for laser cutting or laser welding, with a laser machining device according to the above embodiment and modifications thereof as defined in claim 8, comprising the following steps generating a machining laser beam by means of the laser beam source;
guiding the machining laser beam in the beam path to the outlet opening by means of the at least one laser beam guiding device; and
deflecting the machining laser beam by means of the at least two high-frequency laser scanners connected in series in the beam path in the propagation direction of the machining laser beam by at least one setting angle in each case,
wherein each of the high-frequency laser scanners provides a maximum setting angle for deflecting the machining laser beam in a first setting plane, and wherein a maximum summary setting angle in the first setting plane is achieved by the serial connection of the high-frequency laser scanners; wherein each of the high-frequency laser scanners deflects the machining laser beam in the first setting plane with a setting frequency in a range greater than or equal to 0.5 kHz; and wherein the setting angles of each high-frequency scanner in the first setting plane are added together by the serial connection.

In the method, at least one or each of the high-frequency laser scanners can provide a further maximum setting angle in a second setting plane. Due to the serial connection of the high-frequency laser scanners, a further maximum summary setting angle can be achieved in the second setting plane. The first setting plane and the second setting plane can be arranged such that they are at an angle and/or perpendicular to one another. At least two of the high-frequency laser scanners can deflect the machining laser beam by setting angles that are the same or different. At least two of the high-frequency laser scanners can provide the maximum setting angle and/or the further maximum setting angle such that they are the same or different. Each of the high-frequency laser scanners can deflect the machining laser beam in the second setting plane with a setting frequency in a range greater than or equal to 0.5 kHz. At least one or each of the high-frequency laser scanners can deflect the machining laser beam in at least one of the setting planes with a setting frequency between 1 kHz and 10 kHz. The maximum setting angle can be provided in a range less than or equal to 50 mrad, preferably 1 to 30 mrad, more preferably 2 to 20 mrad. Furthermore, the further maximum setting angle can be provided in a range less than or equal to 50 mrad, preferably 1 to 30 mrad, more preferably 2 to 20 mrad.

In the method, the workpiece can be machined with at least one parameter selected from
- at least one setting frequency in a range greater than or equal to 0.5 kHz, preferably between 1 kHz and 10 kHz;
- at least one of the setting angles in the respective setting planes, in particular with at least one of the maximum summary setting angles; and
- a laser power greater than or equal to 1 kW, preferably between 1 kW and 100 kW, of the laser beam source.

Another embodiment relates to a computer program product comprising one or a plurality of program modules, which cause the device according to the preceding embodiment and modifications thereof to carry out steps of the method according to the preceding embodiment and modifications, in particular when the program modules are loaded into a memory device of the device.

The embodiments and modifications of the laser machining device can be used in the embodiments and modifications of the method for laser machining a workpiece. The workpiece can contain at least one metal, i.e. be metallic, and/or be in the form of a metal sheet. With the above embodiments of the method for laser machining a workpiece, the same advantages and functions can be realized as with the embodiments of the laser machining device, in particular with identical and/or analogous features.

It is understood that the above-mentioned features and those to be explained below can be used not only in the combinations indicated, but also in other combinations or on their own, without departing from the scope of the present invention.

In the following, the invention will be explained in more detail on the basis of exemplary embodiments with reference to the accompanying drawings, which likewise disclose features that are essential to the invention. These exemplary embodiments are used for illustration purposes only and are not to be construed as limiting. For example, a description of an exemplary embodiment with a large number of elements or components should not be interpreted to the effect that all of these elements or components are necessary for implementation. Rather, other exemplary embodiments can also contain alternative elements and components, fewer elements or components, or additional elements or components. Elements or components of different exemplary embodiments can be combined with one another, unless otherwise indicated. Modifications and variations which are described for one of the exemplary embodiments can also be applied to other exemplary embodiments. To avoid repetition, elements that are the same or that correspond to one another are denoted by the same reference signs in different figures and are not explained more than once. In the drawings:
- Figure 1: schematically shows an example of a laser machining device;
- Figure 2a: schematically shows an example of a laser beam guiding device;
- Figure 2b: schematically shows a modification of the example of the laser beam guiding device of Figure 2a;
- Figure 3a: schematically shows an example of a laser beam guiding device;
- Figure 3b: schematically shows a modification of the example of the laser beam guiding device of Figure 3a;
- Figure 4: schematically shows a modification of the example of the laser machining device.

The terms "high frequency", "highly frequent" or "dynamic" can refer to a frequency greater than or equal to 0.5 kHz in the present case. The same applies to grammatical variations of the terms.

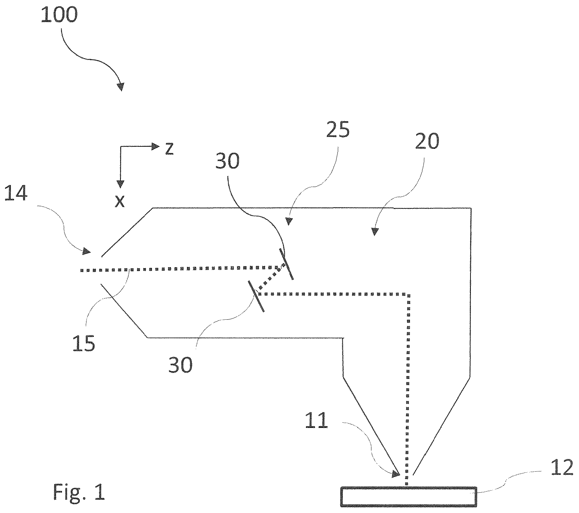

Figure 1 schematically shows an example of a laser machining device 100, hereinafter also referred to as a device 100, for machining a workpiece 12, in particular for laser cutting or laser welding. In the present example, the laser machining device 100 is designed as a laser machining head. The device 100 has an interface 14 for coupling a laser beam source for a machining laser beam 15; an outlet opening **11** for the machining laser beam; and an optical system 20 between the interface and the outlet opening. The optical system 20 has at least one laser beam guiding device 25 for guiding the machining laser beam 15 in a beam path to the outlet opening. The laser beam guiding device 25 consists of at least two high-frequency laser scanners 30 connected in series in the beam path in the propagation direction z of the machining laser beam. As shown in Figure 1, the machining laser beam 15 can be deflected by the optical system 20 in the direction of the outlet opening **11** after passing through the laser beam guiding device 25, i.e. behind the laser beam guiding device 25. Alternatively, the machining laser beam 15 can be guided in the optical system 20 in a straight line behind the laser beam guiding device 25 to the outlet opening **11** (not shown).

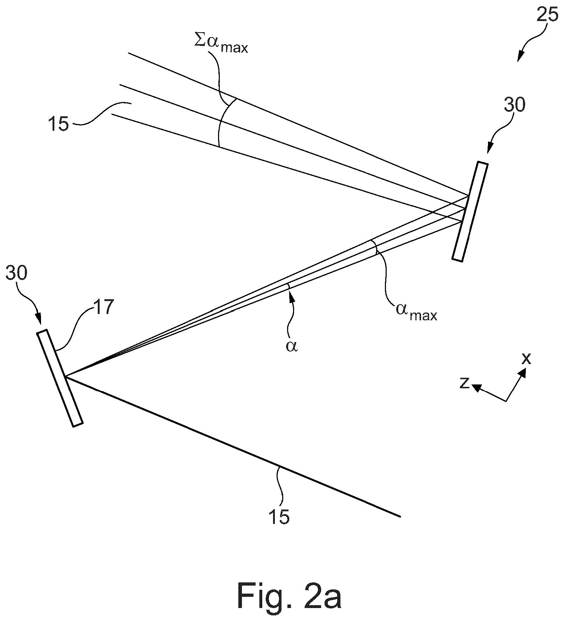

Figure 2a schematically shows the laser beam guiding device 25. The high-frequency laser scanners 30 are each designed to deflect the machining laser beam 15 by at least one setting angle α, which lies in a first setting plane xz. In the present example, the first setting plane xz is spanned by the propagation direction z and a direction x orthogonal to it. Each of the high-frequency laser scanners 30 is designed to provide a maximum setting angle αₘₐₓ for deflecting the machining laser beam 15 in the first setting plane xz. The serial connection of the high-frequency laser scanners 30 provides a maximum summary setting angle Σαₘₐₓ in the first setting plane xz.

During operation of the laser machining device 100, a machining laser beam 15 is generated by means of a laser beam source (not shown in Figure 1) coupled to the interface 14. The machining laser beam 15 is guided in the beam path to the outlet opening **11** by means of the optical system 20. The machining laser beam 15 is deflected by the two high-frequency laser scanners 30 of the laser beam guiding device 25 connected in series in the beam path in the propagation direction z of the machining laser beam 15 by the setting angle α in each case.

Each of the high-frequency laser scanners 30 provides the maximum setting angle αₘₐₓ for deflecting the machining laser beam in the first setting plane xz. The serial connection of the high-frequency laser scanners achieves a maximum summary setting angle Σαₘₐₓ in the first setting plane xz.

Since the high-frequency laser scanners 30 are arranged in series in the propagation direction z of the machining laser beam 15, the setting angles α of each high-frequency laser scanner 30 are added together in the first setting plane xz during operation of the device 100. This is a simple way of enlarging the scanning range. If both high-frequency laser scanners 30 are set to the maximum setting angle αₘₐₓ, the maximum summary setting angle Σαₘₐₓ is reached and the scanning range is maximized. Furthermore, the summary setting angle by which the machining laser beam 15 is deflected is optimized independently of the setting frequency of the high-frequency laser scanners 30. In addition, higher setting frequencies of the high-frequency laser scanners 30 can be provided with a large scanning range.

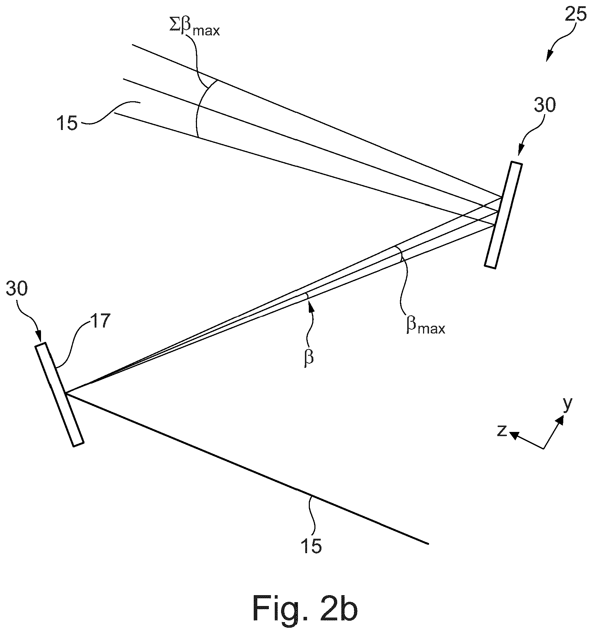

Figure 2b shows a modification of the example shown in Figure 2a. In this modification, the high-frequency laser scanners 30 are additionally designed to deflect the machining laser beam 15 by at least one setting angle β in a second setting plane yz. In the present example, the second setting plane yz is spanned by the propagation direction z and a direction y orthogonal to it. Furthermore, in the present example, the second setting plane yz is orthogonal to the first setting plane xz. Each of the high-frequency laser scanners 30 is designed to provide a maximum setting angle βₘₐₓ for deflecting the machining laser beam 15 in the second setting plane yz.

In addition to the maximum summary setting angle Σαₘₐₓ in the first setting plane xz, a maximum summary setting angle Σβₘₐₓ in the second setting plane yz can be achieved by the serial connection of the high-frequency laser scanners 30 during operation of the laser beam guiding device 25 of the present modification. The maximum summary setting angles Σαₘₐₓ and Σβₘₐₓ can be set with the high-frequency laser scanners 30 in the two setting planes xz and yz, i.e. in two orthogonal directions x and y perpendicular to the propagation direction z of the machining laser beam 15. Therefore, the machining laser beam 15 can be deflected along optimized paths in the plane xy spanned by the directions x and y during scanning.

In the present examples, each of the high-frequency laser scanners 30 is designed to deflect the machining laser beam 15 in at least one of the setting planes xz and yz with a setting frequency of, for example, 2 kHz, with setting angles in the range up to the maximum setting angles αₘₐₓ and/or βₘₐₓ of 50 mrad, for example 10 mrad.

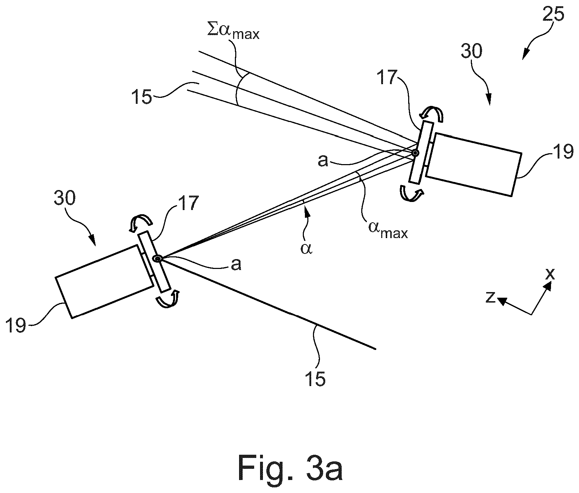

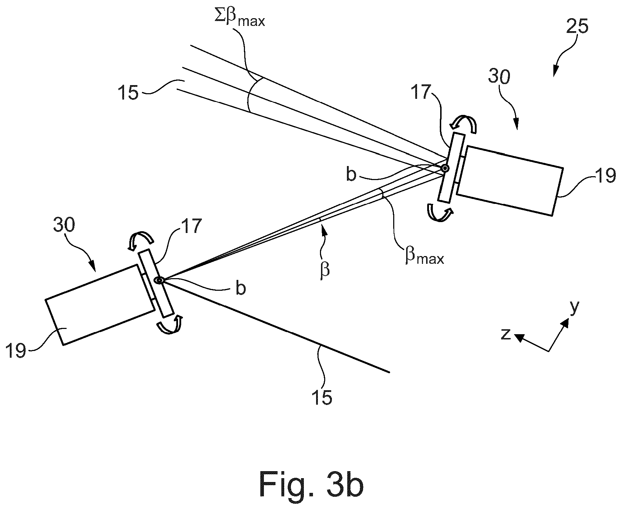

Figure 3a shows a further example of the laser beam guiding device 25 shown in Figure 2a. Figure 3b illustrates a modification of the example in Figure 3a that is analogous to Figure 2b. In this example, each of the high-frequency laser scanners 30 has a movable surface 17 reflecting the machining laser beam 15 and at least one controllable actuator 19 for moving the surface 17. The reflecting movable surface 17 is designed as a dynamically, i.e. high-frequency, tiltable mirror made of SiC (silicon carbide). Alternatively, a glass substrate (e.g. fused silica) provided with a dielectric layer, a metal layer (e.g. copper) or a metal oxide layer can be used as a mirror. The size of the surface 17 is, in each case, selected such that it corresponds to the diameter of the machining laser beam 15 at the position of the respective mirror. The actuator 19 is a piezo actuator.

In modifications of this example, a segmented mirror with multiple dynamically orientable mirror segments, a dynamically deformable mirror, a dynamically deformable mirror with variable radius of curvature (VRM), a dynamically bimorph deformable mirror, a dynamically deformable mirror based on MEMS or MOEMS technology, or a dynamically voice coil deformable mirror can be used as the reflecting movable surface 17.

In the example of Figure 3a, two reflecting tiltable surfaces 17 connected in series in the propagation direction z of the machining laser beam 15 are provided as the high-frequency laser scanners 30, each of which has a first axis a about which it can be tilted by means of the actuators 19. The first axes a each lie in the plane of the relevant surface 17, are arranged perpendicular to the plane xz and parallel to one another. The setting frequency with which the surfaces 17 of the two high-frequency laser scanners 30 can each be tilted about the first axis a and the setting angle by which they can each be tilted about the first axis a are predetermined as being different. In this regard, one of the high-frequency laser scanners 30 is optimized for a high frequency and the other high-frequency laser scanner 30 is optimized for a large deflection. In this embodiment of the high-frequency laser scanners 30, two uniaxial surfaces 17 are combined in series.

In the modification shown in Figure 3b, the two surfaces 17 connected in series each have a second axis b, which is arranged perpendicular to the first axis a and about which they can be tilted. The second axes b each lie in the plane of the relevant surface 17, are arranged perpendicular to the plane yz and parallel to one another. The setting frequency with which the surfaces 17 can be tilted about the two axes a and b and the setting angle by which they can be tilted about the two axes a and b can be the same or different. In this embodiment of the high-frequency laser scanners 30, two multi-axis surfaces 17 are combined in series.

In another modification of this example, a high-frequency laser scanner 30 whose surface 17 has the first axis a and another high-frequency laser scanner 30 whose surface 17 has the first axis a and the second axis b are combined. The setting frequency with which the surfaces 17 can be tilted about the respective axes a and b and the setting angle by which they can be tilted about the respective axes a and b can be the same or different. In this embodiment of the high-frequency laser scanners 30, a uniaxial surface 17 and a multi-axis surface 17 are combined in series.

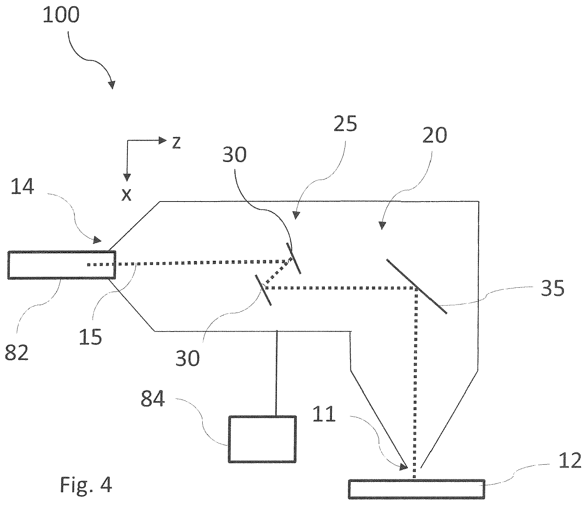

Figure 4 shows a modification of the laser machining device 100. In Figure 4, the laser machining device 100 is provided with a laser source 82 at the interface 14. Alternatively, the laser beam source 82 can be connected to the interface 14 via a transport fibre (not shown). A control unit 84 is connected to the controllable components of the device 100 in a wired or wireless data-transmitting manner, in particular to the high-frequency laser scanners 30 of the laser beam guiding device 25. The optical system 20 can contain further optical elements, such as lenses (not shown). As shown in Figure 4, the optical system 20 can contain a deflecting mirror 35 which deflects the machining laser beam 15 deflected by the high-frequency laser scanners 30 to the outlet opening 11.

### List of reference signs

- 11: Outlet opening
- 12: Workpiece
- 14: Interface
- 15: Machining laser beam
- 17: Surface
- 19: Actuator
- 20: Optical system
- 25: Laser beam guiding device
- 30: High-frequency laser scanner
- 35: Deflecting mirror
- 82: Laser beam source
- 84: Control device
- 100: Laser machining device
- xz: Setting plane
- yz: Setting plane

## Claims

1. A laser machining device (100) for machining a workpiece (12), in particular for laser cutting or laser welding, in particular a laser machining head, having
- an interface (14) for coupling a laser beam source for a machining laser beam (15)
- an outlet opening (11) for the machining laser beam; and
- an optical system (20) between the interface and the outlet opening, which has at least one laser beam guiding device (25) for guiding the machining laser beam in a beam path to the outlet opening;
wherein the laser beam guiding device includes at least two high-frequency laser scanners (30) connected in series in the beam path in the propagation direction (z) of the machining laser beam, which are each designed to deflect the machining laser beam by at least one setting angle (α, β),
**characterized in that**
each of the high-frequency laser scanners (30) is designed to provide a maximum setting angle (αₘₐₓ) for deflecting the machining laser beam in a first setting plane (xz), and wherein a maximum summary setting angle (Σαₘₐₓ) in the first setting plane (xz) is achieved by the serial connection of the high-frequency laser scanners (30);
wherein each of the high-frequency laser scanners (30) is designed to deflect the machining laser beam in the first setting plane (xz) with a setting frequency in a range greater than or equal to 0.5 kHz; and
wherein the setting angles of each high-frequency scanner in the first setting plane are added together by the serial connection.

2. The device according to claim 1,
wherein at least one of the high-frequency laser scanners (30) is designed to provide a further maximum setting angle (βₘₐₓ) in a second setting plane (yz).

3. The device according to claim 2,
wherein the first setting plane (xz) and the second setting plane (yz) are arranged perpendicular to one another; and/or
wherein each of the high-frequency laser scanners (30) is designed to provide the further maximum setting angle (βₘₐₓ) in the second setting plane (yz); and/or
wherein a further maximum summary setting angle (Σβₘₐₓ) in the second setting plane (yz) is achieved by the serial connection of the high-frequency laser scanners.

4. The device according to one of the preceding claims,
wherein each of the high-frequency laser scanners (30) is designed to deflect the machining laser beam in the second setting plane (yz) with a setting frequency in a range greater than or equal to 0.5 kHz; and/or
wherein each of the high-frequency laser scanners (30) is designed to deflect the machining laser beam in at least one of the setting planes (xz; yz) with a setting frequency between 1 kHz and 10 kHz; and/or
wherein the maximum setting angle (αₘₐₓ) is less than or equal to 50 mrad, preferably 1 to 30 mrad, more preferably 2 to 20 mrad; and/or
wherein the further maximum setting angle (βₘₐₓ) is less than or equal to 50 mrad, preferably 1 to 30 mrad, more preferably 2 to 20 mrad.

5. The device according to one of the preceding claims,
wherein at least one or each of the high-frequency laser scanners (30) has at least one movable surface (17) reflecting the machining laser beam and at least one controllable actuator (19) for moving the surface, and/or
wherein the at least one reflecting movable surface (17) is selected from a dynamically orientable mirror, a dynamically tiltable mirror, a segmented mirror with multiple dynamically orientable mirror segments, a dynamically deformable mirror, a dynamically deformable mirror with variable radius of curvature (VRM), a dynamically bimorph deformable mirror, a dynamically deformable mirror based on MEMS or MOEMS technology and a dynamically voice coil deformable mirror, and/or
wherein the at least one controllable actuator (19) is selected from a piezo actuator, an electric motor, a pneumatic motor, an eccentric, a device for generating an oscillating electromagnetic field, a MEMS oscillator, a voice coil, an electrostatically movable actuator, a galvanometer drive, a plurality thereof and/or a combination thereof.

6. The device according to one of the preceding claims,
wherein a control unit (84) is provided for controlling the high-frequency laser scanners (30) and/or the laser machining device (100), which has one or a plurality of program modules for optimizing and/or maximizing the setting frequency and/or the setting angle; and/or
wherein the laser machining device (100) is designed as a machining head and a device for moving the machining head is provided; and/or
wherein a laser beam source (82) for the machining laser beam is coupled to the interface, in particular a laser beam source with a laser power greater than or equal to 1 kW, preferably between 1 kW and 100 kW.

7. Use of a laser machining device (100) according to one of the preceding claims, for performing at least one procedure selected from
- machining a workpiece (12) with at least one setting frequency in a range greater than or equal to 0.5 kHz, preferably between 1 kHz and 10 kHz, and/or with at least one of the summary setting angles (Σα; Σβ), in particular with at least one of the maximum summary setting angles (Σα_{max;;} Σβₘₐₓ), and/or with a laser power greater than or equal to 1 kW, preferably between 1 kW and 100 kW, of the laser beam source;
- machining a workpiece (12) with the laser machining device (100) designed as a machining head, with optimization of a movement trajectory of the machining laser beam (15) in at least one workpiece plane, in particular in accordance with at least one predetermined contour of workpiece parts to be cut or weld seams, by means of redundant division of the movement trajectory of the machining laser beam between the device for moving the machining head and the high-frequency laser scanners (30);
- centring of the machining laser beam (15) in the outlet opening (11);
- laser cutting with the cutting gas beam decentred in relation to the machining laser beam, in particular laser cutting for producing bevel cuts or laser cutting of tubes;
- laser cleaning;
- laser hardening;
- removing filler material from CFRP materials using the machining laser beam, in particular fibreglass; and
- laser welding.

8. A method for laser machining a workpiece (12), in particular for laser cutting or laser welding, with a laser machining device (100) according to one of claims 1 to 6; comprising the following steps
generating a machining laser beam (15) by means of the laser beam source (82); guiding the machining laser beam in the beam path to the outlet opening (11) by means of the at least one laser beam guiding device (25); and
deflecting the machining laser beam (15) by means of the at least two high-frequency laser scanners (30) connected in series in the beam path in the propagation direction (z) of the machining laser beam by at least one setting angle (α, β) in each case,
**characterized in that** each of the high-frequency laser scanners (30) provides a maximum setting angle (αₘₐₓ) for deflecting the machining laser beam in a first setting plane (xz), and a maximum summary setting angle (Σαₘₐₓ) in the first setting plane (xz) is achieved by the serial connection of the high-frequency laser scanners (30);
wherein each of the high-frequency laser scanners (30) deflects the machining laser beam in the first setting plane (xz) with a setting frequency in a range greater than or equal to 0.5 kHz; and
wherein the setting angles of each high-frequency scanner in the first setting plane are added together by the serial connection.

9. The method according to claim 8,
wherein at least one or each of the high-frequency laser scanners (30) provides a further maximum setting angle (βₘₐₓ) in a second setting plane (yz).

10. The method according to claim 9,
wherein a further maximum summary setting angle (Σβₘₐₓ) in the second setting plane (yz) is achieved by the serial connection of the high-frequency laser scanners (30); and/or
wherein the first setting plane (xz) and the second setting plane (yz) are arranged such that they are perpendicular to one another.

11. The method according to one of claims 8 to 10,
wherein each of the high-frequency laser scanners (30) deflects the machining laser beam (15) in the second setting plane (yz) with a setting frequency in a range greater than or equal to 0.5 kHz; and/or
wherein each of the high-frequency laser scanners (30) deflects the machining laser beam (15) in at least one of the setting planes (xz; yz) with a setting frequency between 1 kHz and 10 kHz; and/or
wherein the maximum setting angle (αₘₐₓ) is provided in a range less than or equal to 50 mrad, preferably 1 to 30 mrad, more preferably 2 to 20 mrad; and/or
wherein the further maximum setting angle (βₘₐₓ) is provided in a range less than or equal to 50 mrad, preferably 1 to 30 mrad, more preferably 2 to 20 mrad.

12. The method according to one of claims 8 to 11,
wherein the workpiece (12) is machined with at least one parameter selected from
- at least one setting frequency in a range greater than or equal to 0.5 kHz, preferably between 1 kHz and 10 kHz;
- at least one of the setting angles (α_{;} β) in the respective setting planes (xz; yz), in particular with at least one of the maximum summary setting angles (Σα_{max;;} Σβₘₐₓ); and
- a laser power greater than or equal to 1 kW, preferably between 1 kW and 100 kW, of the laser beam source.

13. A computer program product comprising one or a plurality of program modules, which cause the device according to one of claims 1 to 6 to carry out the method steps according to one of claims 8 to 12, in particular when the program modules are loaded into a memory device of the device.

## Patentansprüche

1. Laserbearbeitungsvorrichtung (100) zum Bearbeiten eines Werkstücks (12), insbesondere zum Laserschneiden oder Laserschweißen, insbesondere ein Laserbearbeitungskopf, mit
- einer Schnittstelle (14) zum Koppeln einer Laserstrahlquelle für einen Bearbeitungslaserstrahl (15),
- einer Auslassöffnung (11) für den Bearbeitungslaserstrahl; und
- einem optischen System (20) zwischen der Schnittstelle und der Auslassöffnung, das mindestens eine Laserstrahlführungsvorrichtung (25) zum Führen des Bearbeitungslaserstrahls in einem Strahlengang zur Auslassöffnung aufweist;
wobei die Laserstrahlführungsvorrichtung mindestens zwei im Strahlengang in Ausbreitungsrichtung (z) des Bearbeitungslaserstrahls hintereinandergeschaltete Hochfrequenz-Laserscanner (30) umfasst, die jeweils dazu ausgebildet sind, den Bearbeitungslaserstrahl um mindestens einen Einstellwinkel (α, β) abzulenken,
**dadurch gekennzeichnet, dass**
jeder der Hochfrequenz-Laserscanner (30) dazu ausgebildet ist, einen maximalen Einstellwinkel (αₘₐₓ) zur Ablenkung des Bearbeitungslaserstrahls in einer ersten Einstellebene (xz) bereitzustellen, und
wobei ein maximaler Summen-Einstellwinkel (∑αₘₐₓ) in der ersten Einstellebene (xz) durch die Hintereinanderschaltung der Hochfrequenz-Laserscanner (30) erreicht wird;
wobei jeder der Hochfrequenz-Laserscanner (30) dazu ausgebildet ist, den Bearbeitungslaserstrahl in der ersten Einstellebene (xz) mit einer Einstellfrequenz in einem Bereich größer als oder gleich 0,5 kHz abzulenken; und
wobei die Einstellwinkel jedes Hochfrequenzscanners in der ersten Einstellebene durch die Hintereinanderschaltung addiert werden.

2. Vorrichtung nach Anspruch 1,
wobei mindestens einer der Hochfrequenz-Laserscanner (30) dazu ausgebildet ist, einen weiteren maximalen Einstellwinkel (βₘₐₓ) in einer zweiten Einstellebene (yz) bereitzustellen.

3. Vorrichtung nach Anspruch 2,
wobei die erste Einstellebene (xz) und die zweite Einstellebene (yz) senkrecht zueinander angeordnet sind; und/oder
wobei jeder der Hochfrequenz-Laserscanner (30) dazu ausgebildet ist, den weiteren maximalen Einstellwinkel (βₘₐₓ) in der zweiten Einstellebene (yz) bereitzustellen; und/oder
wobei ein weiterer maximaler Summen-Einstellwinkel (∑βₘₐₓ) in der zweiten Einstellebene (yz) durch die Hintereinanderschaltung der Hochfrequenz-Laserscanner erreicht wird.

4. Vorrichtung nach einem der vorhergehenden Ansprüche,
wobei jeder der Hochfrequenz-Laserscanner (30) dazu ausgebildet ist, den Bearbeitungslaserstrahl in der zweiten Einstellebene (yz) mit einer Einstellfrequenz in einem Bereich größer als oder gleich 0,5 kHz abzulenken; und/oder
wobei jeder der Hochfrequenz-Laserscanner (30) dazu ausgebildet ist, den Bearbeitungslaserstrahl in mindestens einer der Einstellebenen (xz; yz) mit einer Einstellfrequenz zwischen 1 kHz und 10 kHz abzulenken; und/oder
wobei der maximale Einstellwinkel (αₘₐₓ) kleiner als oder gleich 50 mrad ist, vorzugsweise 1 bis 30 mrad, besonders bevorzugt 2 bis 20 mrad; und/oder
wobei der weitere maximale Einstellwinkel (βₘₐₓ) kleiner als oder gleich 50 mrad ist, vorzugsweise 1 bis 30 mrad, besonders bevorzugt 2 bis 20 mrad.

5. Vorrichtung nach einem der vorhergehenden Ansprüche,
wobei mindestens einer oder jeder der Hochfrequenz-Laserscanner (30) mindestens eine bewegliche Oberfläche (17), die den Bearbeitungslaserstrahl reflektiert, und mindestens einen steuerbaren Aktuator (19) zum Bewegen der Oberfläche aufweist, und/oder
wobei die mindestens eine reflektierende bewegliche Oberfläche (17) ausgewählt ist aus einem dynamisch ausrichtbaren Spiegel, einem dynamisch kippbaren Spiegel, einem segmentierten Spiegel mit mehreren dynamisch ausrichtbaren Spiegelsegmenten, einem dynamisch verformbaren Spiegel, einem dynamisch verformbaren Spiegel mit variablem Krümmungsradius (VRM), einem dynamisch bimorph verformbaren Spiegel, einem dynamisch verformbaren Spiegel auf Basis von MEMS- oder MOEMS-Technologie und einem dynamisch verformbaren Schwingspulenspiegel, und/oder
wobei der mindestens eine steuerbare Aktuator (19) ausgewählt ist aus einem Piezoaktuator, einem Elektromotor, einem Pneumatikmotor, einem Exzenter, einer Vorrichtung zum Erzeugen eines oszillierenden elektromagnetischen Feldes, einem MEMS-Oszillator, einer Schwingspule, einem elektrostatisch beweglichen Aktuator, einem Galvanometerantrieb, einer Vielzahl davon und/oder einer Kombination davon.

6. Vorrichtung nach einem der vorhergehenden Ansprüche,
wobei eine Steuereinheit (84) zum Steuern der Hochfrequenz-Laserscanner (30) und/oder der Laserbearbeitungsvorrichtung (100) bereitgestellt ist, die ein oder eine Vielzahl von Programmmodulen zum Optimieren und/oder Maximieren der Einstellfrequenz und/oder des Einstellwinkels aufweist; und/oder
wobei die Laserbearbeitungsvorrichtung (100) als Bearbeitungskopf ausgebildet ist und eine Vorrichtung zum Bewegen des Bearbeitungskopfs bereitgestellt ist; und/oder
wobei eine Laserstrahlquelle (82) für den Bearbeitungslaserstrahl an die Schnittstelle gekoppelt ist, insbesondere eine Laserstrahlquelle mit einer Laserleistung größer als oder gleich 1 kW, vorzugsweise zwischen 1 kW und 100 kW.

7. Verwendung einer Laserbearbeitungsvorrichtung (100) nach einem der vorhergehenden Ansprüche zur Durchführung mindestens eines Verfahrens, ausgewählt aus
- Bearbeiten eines Werkstücks (12) mit mindestens einer Einstellfrequenz in einem Bereich größer als oder gleich 0,5 kHz, vorzugsweise zwischen 1 kHz und 10 kHz, und/oder mit mindestens einem der Summen-Einstellwinkel (∑α; ∑β), insbesondere mit mindestens einem der maximalen Summen-Einstellwinkel (∑αₘₐₓ; ∑βₘₐₓ), und/oder mit einer Laserleistung größer als oder gleich 1 kW, vorzugsweise zwischen 1 kW und 100 kW, der Laserstrahlquelle;
- Bearbeiten eines Werkstücks (12) mit der als Bearbeitungskopf ausgebildeten Laserbearbeitungsvorrichtung (100) unter Optimierung einer Bewegungstrajektorie des Bearbeitungslaserstrahls (15) in mindestens einer Werkstückebene, insbesondere entsprechend mindestens einer vorgegebenen Kontur von zu schneidenden Werkstückteilen oder Schweißnähten, mittels redundanter Aufteilung der Bewegungstrajektorie des Bearbeitungslaserstrahls zwischen der Vorrichtung zum Bewegen des Bearbeitungskopfs und den Hochfrequenz-Laserscannern (30);
- Zentrieren des Bearbeitungslaserstrahls (15) in der Auslassöffnung (11);
- Laserschneiden mit gegenüber dem Bearbeitungslaserstrahl dezentriertem Schneidgasstrahl, insbesondere Laserschneiden zur Herstellung von Schrägschnitten oder Laserschneiden von Rohren;
- Laserreinigen;
- Laserhärten;
- Entfernen von Füllmaterial aus CFK-Materialien unter Verwendung des Bearbeitungslaserstrahls, insbesondere Glasfaser; und
- Laserschweißen.

8. Verfahren zum Laserbearbeiten eines Werkstücks (12), insbesondere zum Laserschneiden oder Laserschweißen, mit einer Laserbearbeitungsvorrichtung (100) nach einem der Ansprüche 1 bis 6; umfassend die folgenden Schritte Erzeugen eines Bearbeitungslaserstrahls (15) mittels der Laserstrahlquelle (82); Führen des Bearbeitungslaserstrahls im Strahlengang zur Auslassöffnung (11) mittels der mindestens einen Laserstrahlführungsvorrichtung (25); und
Ablenken des Bearbeitungslaserstrahls (15) mittels der mindestens zwei im Strahlengang in Ausbreitungsrichtung (z) des Bearbeitungslaserstrahls hintereinandergeschalteten Hochfrequenz-Laserscanner (30) um jeweils mindestens einen Einstellwinkel (α, β),
**dadurch gekennzeichnet, dass** jeder der Hochfrequenz-Laserscanner (30) einen maximalen Einstellwinkel (αₘₐₓ) zur Ablenkung des Bearbeitungslaserstrahls in einer ersten Einstellebene (xz) bereitstellt und ein maximaler Summen-Einstellwinkel (∑αₘₐₓ) in der ersten Einstellebene (xz) durch die Hintereinanderschaltung der Hochfrequenz-Laserscanner (30) erreicht wird;
wobei jeder der Hochfrequenz-Laserscanner (30) den Bearbeitungslaserstrahl in der ersten Einstellebene (xz) mit einer Einstellfrequenz in einem Bereich größer als oder gleich 0,5 kHz ablenkt; und
wobei die Einstellwinkel jedes Hochfrequenzscanners in der ersten Einstellebene durch die Hintereinanderschaltung addiert werden.

9. Verfahren nach Anspruch 8,
wobei mindestens einer oder jeder der Hochfrequenz-Laserscanner (30) einen weiteren maximalen Einstellwinkel (βₘₐₓ) in einer zweiten Einstellebene (yz) bereitstellt.

10. Verfahren nach Anspruch 9,
wobei ein weiterer maximaler Summen-Einstellwinkel (∑βₘₐₓ) in der zweiten Einstellebene (yz) durch die Hintereinanderschaltung der Hochfrequenz-Laserscanner (30) erreicht wird; und/oder
wobei die erste Einstellebene (xz) und die zweite Einstellebene (yz) so angeordnet sind, dass sie senkrecht zueinander stehen.

11. Verfahren nach einem der Ansprüche 8 bis 10,
wobei jeder der Hochfrequenz-Laserscanner (30) den Bearbeitungslaserstrahl (15) in der zweiten Einstellebene (yz) mit einer Einstellfrequenz in einem Bereich größer als oder gleich 0,5 kHz ablenkt; und/oder
wobei jeder der Hochfrequenz-Laserscanner (30) den Bearbeitungslaserstrahl (15) in mindestens einer der Einstellebenen (xz; yz) mit einer Einstellfrequenz zwischen 1 kHz und 10 kHz ablenkt; und/oder
wobei der maximale Einstellwinkel (αₘₐₓ) in einem Bereich kleiner als oder gleich 50 mrad bereitgestellt wird, vorzugsweise 1 bis 30 mrad, besonders bevorzugt 2 bis 20 mrad; und/oder
wobei der weitere maximale Einstellwinkel (βₘₐₓ) in einem Bereich kleiner als oder gleich 50 mrad bereitgestellt wird, vorzugsweise 1 bis 30 mrad, besonders bevorzugt 2 bis 20 mrad.

12. Verfahren nach einem der Ansprüche 8 bis 11,
wobei das Werkstück (12) mit mindestens einem Parameter bearbeitet wird, ausgewählt aus
- mindestens einer Einstellfrequenz in einem Bereich größer als oder gleich 0,5 kHz, vorzugsweise zwischen 1 kHz und 10 kHz;
- mindestens einem der Einstellwinkel (α; β) in den jeweiligen Einstellebenen (xz; yz), insbesondere mit mindestens einem der maximalen Summen-Einstellwinkel (∑αₘₐₓ; ∑βₘₐₓ); und
- einer Laserleistung größer als oder gleich 1 kW, vorzugsweise zwischen 1 kW und 100 kW, der Laserstrahlquelle.

13. Computerprogrammprodukt, umfassend ein oder eine Vielzahl von Programmmodulen, die die Vorrichtung nach einem der Ansprüche 1 bis 6 veranlassen, die Verfahrensschritte nach einem der Ansprüche 8 bis 12 auszuführen, insbesondere wenn die Programmmodule in eine Speichervorrichtung der Vorrichtung geladen sind.

## Revendications

1. Dispositif d'usinage au laser (100) pour usiner une pièce (12), notamment pour la découpe ou le soudage au laser, et notamment une tête d'usinage au laser, possédant
- une interface (14) pour coupler une source de faisceau laser à un faisceau laser d'usinage (15)
- une ouverture de sortie (11) pour le faisceau laser d'usinage ; et
- un système optique (20) entre l'interface et l'ouverture de sortie, qui comporte au moins un dispositif de guidage de faisceau laser (25) pour guider le faisceau laser d'usinage dans un trajet de faisceau vers l'ouverture de sortie ;
dans lequel le dispositif de guidage de faisceau laser comprend au moins deux scanners laser haute fréquence (30) connectés en série sur le trajet de faisceau dans la direction de propagation (z) du faisceau laser d'usinage, chacun étant conçu pour dévier le faisceau laser d'usinage d'au moins un angle de réglage (α, β),
**caractérisé en ce que**
chacun des scanners laser haute fréquence (30) est conçu pour fournir un angle de réglage maximal (αₘₐₓ) afin de dévier le faisceau laser d'usinage dans un premier plan de réglage (xz), et
dans lequel un angle de réglage de synthèse maximal (∑αₘₐₓ) dans le premier plan de réglage (xz) est obtenu par la connexion en série des scanners laser haute fréquence (30) ; dans lequel chacun des scanners laser haute fréquence (30) est conçu pour dévier le faisceau laser d'usinage dans le premier plan de réglage (xz) à une fréquence de réglage supérieure ou égale à 0,5 kHz ; et
dans lequel les angles de réglage de chaque scanner haute fréquence du premier plan de réglage sont additionnés par la connexion en série.

2. Dispositif selon la revendication 1,
dans lequel au moins un des scanners laser haute fréquence (30) est conçu pour fournir un angle de réglage maximal supplémentaire (βₘₐₓ) dans un second plan de réglage (yz).

3. Dispositif selon la revendication 2,
dans lequel le premier plan de réglage (xz) et le second plan de réglage (yz) sont disposés perpendiculairement l'un à l'autre ; et/ou
dans lequel chacun des scanners laser haute fréquence (30) est conçu pour fournir l'angle de réglage maximal supplémentaire (βₘₐₓ) dans le second plan de réglage (yz) ; et/ou
dans lequel un angle de réglage de synthèse maximal supplémentaire (∑βₘₐₓ) dans le second plan de réglage (yz) est obtenu par la connexion en série des scanners laser haute fréquence.

4. Dispositif selon l'une des revendications précédentes,
dans lequel chacun des scanners laser haute fréquence (30) est conçu pour dévier le faisceau laser d'usinage dans le second plan de réglage (yz) à une fréquence de réglage supérieure ou égale à 0,5 kHz ; et/ou
dans lequel chacun des scanners laser haute fréquence (30) est conçu pour dévier le faisceau laser d'usinage dans au moins un des plans de réglage (xz ; yz) à une fréquence de réglage comprise entre 1 kHz et 10 kHz ; et/ou
dans lequel l'angle de réglage maximal (αₘₐₓ) est inférieur ou égal à 50 mrad, de préférence de 1 mrad à 30 mrad, plus particulièrement de 2 mrad à 20 mrad ; et/ou
dans lequel l'angle de réglage maximal supplémentaire (βₘₐₓ) est inférieur ou égal à 50 mrad, de préférence de 1 mrad à 30 mrad, plus particulièrement de 2 mrad à 20 mrad.

5. Dispositif selon l'une des revendications précédentes,
dans lequel au moins un des scanners laser haute fréquence (30) ou chacun d'entre eux comporte au moins une surface mobile (17) réfléchissant le faisceau laser d'usinage et au moins un actionneur pouvant être commandé (19) pour déplacer la surface, et/ou
dans lequel l'au moins une surface mobile (17) réfléchissante est sélectionnée parmi un miroir à orientation dynamique, un miroir à inclinaison dynamique, un miroir segmenté comportant plusieurs segments de miroir à orientation dynamique, un miroir à déformation dynamique, un miroir à déformation dynamique à rayon de courbure variable (VRM), un miroir à déformation dynamique bimorphe, un miroir à déformation dynamique basé sur la technologie MEMS ou MOEMS et un miroir à déformation dynamique à bobine mobile, et/ou
dans lequel l'au moins un actionneur pouvant être commandé (19) est sélectionné parmi un actionneur piézo, un moteur électrique, un moteur pneumatique, un excentrique, un dispositif pour générer un champ électromagnétique oscillant, un oscillateur MEMS, une bobine mobile, un actionneur électrostatiquement mobile, un entraînement galvanométrique, une pluralité de ceux-ci et/ou leur combinaison.

6. Dispositif selon l'une des revendications précédentes,
dans lequel une unité de commande (84) sert à commander les scanners laser haute fréquence (30) et/ou le dispositif d'usinage au laser (100), qui comporte un ou plusieurs modules de programme pour optimiser et/ou maximiser la fréquence de réglage et/ou l'angle de réglage ; et/ou
dans lequel le dispositif d'usinage au laser (100) est conçu en tant que tête d'usinage et il est prévu un dispositif de déplacement de la tête d'usinage ; et/ou
dans lequel une source de faisceau laser (82) pour le faisceau laser d'usinage est couplée à l'interface, en particulier une source de faisceau laser avec une puissance laser supérieure ou égale à 1 kW, de préférence entre 1 kW et 100 kW.

7. Utilisation d'un dispositif d'usinage au laser (100) selon l'une des revendications précédentes, pour réaliser au moins une procédure choisie parmi
- l'usinage d'une pièce (12) à au moins une fréquence de réglage dans une plage supérieure ou égale à 0,5 kHz, de préférence entre 1 kHz et 10 kHz, et/ou à au moins un des angles de réglage de synthèse (∑α ; ∑β), en particulier à au moins un des angles de réglage de synthèse maximal (∑αₘₐₓ ; ∑βₘₐₓ), et/ou à une puissance laser supérieure ou égale à 1 kW, de préférence entre 1 kW et 100 kW, de la source du faisceau laser ;
- l'usinage d'une pièce (12) avec le dispositif d'usinage au laser (100) conçu en tant que tête d'usinage, avec optimisation d'une trajectoire de mouvement du faisceau laser d'usinage (15) dans au moins un plan de pièce, en particulier conformément à au moins un contour prédéterminé des parties de pièce à découper ou à souder, au moyen d'une division redondante de la trajectoire de mouvement du faisceau laser d'usinage entre le dispositif de déplacement de la tête d'usinage et les scanners laser haute fréquence (30) ;
- le centrage du faisceau laser d'usinage (15) dans l'ouverture de sortie (11) ;
- la découpe au laser avec faisceau de gaz de coupe décentré par rapport au faisceau laser d'usinage, notamment la découpe au laser pour la réalisation de coupes biseautées ou la découpe de tubes au laser ;
- le nettoyage au laser ;
- le durcissement au laser ;
- l'élimination des matériaux de remplissage à partir des CFRP à l'aide du faisceau d'usinage au laser, en particulier de la fibre de verre ; et
- le soudage au laser.

8. Procédé d'usinage au laser d'une pièce (12), notamment de découpe ou de soudage au laser, avec un dispositif d'usinage au laser (100) selon l'une des revendications 1 à 6 ; comprenant les étapes suivantes
la génération d'un faisceau laser d'usinage (15) au moyen de la source de faisceau laser (82) ;
le guidage du faisceau laser d'usinage sur le trajet du faisceau jusqu'à l'ouverture de sortie (11) au moyen de l'au moins un dispositif de guidage de faisceau laser (25) ; et
la déviation du faisceau laser d'usinage (15) au moyen des au moins deux scanners laser haute fréquence (30) connectés en série sur le trajet de faisceau dans la direction de propagation (z) du faisceau laser d'usinage par au moins un angle de réglage (α, β) dans chaque cas,
**caractérisé en ce que** chacun des scanners laser haute fréquence (30) fournit un angle de réglage maximal (αₘₐₓ) pour dévier le faisceau laser d'usinage dans un premier plan de réglage (xz), et un angle de réglage de synthèse maximal (∑αₘₐₓ) dans le premier plan de réglage (xz) est obtenu par la connexion en série des scanners laser haute fréquence (30) ; dans lequel chacun des scanners laser haute fréquence (30) dévie le faisceau laser d'usinage dans le premier plan de réglage (xz) à une fréquence de réglage supérieure ou égale à 0,5 kHz ; et
dans lequel les angles de réglage de chaque scanner haute fréquence du premier plan de réglage sont additionnés par la connexion en série.

9. Procédé selon la revendication 8,
dans lequel au moins un des scanners laser haute fréquence (30) ou chacun d'entre eux fournit un angle de réglage maximal supplémentaire (βₘₐₓ) dans un second plan de réglage (yz).

10. Procédé selon la revendication 9,
dans lequel un angle de réglage de synthèse maximal supplémentaire (∑βₘₐₓ) dans le second plan de réglage (yz) est obtenu par la connexion en série des scanners laser haute fréquence (30) ; et/ou
dans lequel le premier plan de réglage (xz) et le second plan de réglage (yz) sont disposés de telle sorte qu'ils soient perpendiculaires l'un à l'autre.

11. Procédé selon l'une des revendications 8 à 10,
dans lequel chacun des scanners laser haute fréquence (30) dévie le faisceau laser d'usinage (15) dans le second plan de réglage (yz) à une fréquence de réglage supérieure ou égale à 0,5 kHz ; et/ou
dans lequel chacun des scanners laser haute fréquence (30) dévie le faisceau laser d'usinage (15) dans au moins un des plans de réglage (xz ; yz) à une fréquence de réglage comprise entre 1 kHz et 10 kHz ; et/ou
dans lequel l'angle de réglage maximal (αₘₐₓ) se trouve dans une plage inférieure ou égale à 50 mrad, de préférence de 1 mrad à 30 mrad, plus particulièrement de 2 mrad à 20 mrad ; et/ou
dans lequel l'angle de réglage maximal supplémentaire (βₘₐₓ) se trouve dans une plage inférieure ou égale à 50 mrad, de préférence de 1 mrad à 30 mrad, plus particulièrement de 2 mrad à 20 mrad.

12. Procédé selon l'une des revendications 8 à 11,
dans lequel la pièce (12) est usinée selon au moins un paramètre sélectionné parmi
- au moins une fréquence de réglage dans une plage supérieure ou égale à 0,5 kHz, de préférence entre 1 kHz et 10 kHz ;
- au moins un des angles de réglage (α ; β) dans les plans de réglage (xz ; yz) respectifs, en particulier avec au moins un des angles de réglage de synthèse maximaux (∑αₘₐₓ ; ∑βₘₐₓ) ; et
- une puissance laser supérieure ou égale à 1 kW, de préférence comprise entre 1 kW et 100 kW, de la source de faisceau laser.

13. Produit programme d'ordinateur comprenant un ou plusieurs modules de programme, qui amènent le dispositif selon l'une des revendications 1 à 6 à exécuter les étapes de procédé selon l'une des revendications 8 à 12, en particulier lorsque les modules de programme sont chargés dans un dispositif de mémoire du dispositif.
